Europäisches Patentamt

European Patent Office

Office européen des brevets

(19)

(11) Publication number: **0 252 050**
**A2**

## (12) EUROPEAN PATENT APPLICATION

(21) Application number: **87850208.7**

(22) Date of filing: **25.06.87**

(51) Int. Cl.⁴: **B 60 B 39/00**

(30) Priority: **03.07.86 SE 8602968**

(43) Date of publication of application:
**07.01.88 Bulletin 88/01**

(84) Designated Contracting States:
**AT BE CH DE ES FR GB IT LI NL SE**

(71) Applicant: **ONSPOT AB**
**Box 1063**
**S-581 10 Linköping (SE)**

(72) Inventor: **Törnebäck, Göte**
**Pilgatan 21**
**S-582 63 Linköping (SE)**

(74) Representative: **Onn, Thorsten et al**
**AB STOCKHOLMS PATENTBYRA Box 3129**
**S-103 62 Stockholm (SE)**

(54) Anti-skid device.

(57) Anti-skid device including a chain provided pulley (1) that via a hub is journaled to a shaft (3) fastened on an arm (4) turn hingedly connected to another arm (5) that is in turn rigidly fastened to the rear axle encasing (6) of the vehicle. Between the arms (5), that constitute against each other open U:s, is arranged a bellow or a piece of hose (7), that when put under pressure by for instance pressurized air tries to straighten, at the same time straightening the moveable arm (4) from the rigid arm (5) bringing the pulley (1) to contact with the wheel. Back from this working position the pulley is brought to the parking position by springs (10) when the pressure inside the hollow is relieved. Since the pulley and it's arm essentially will be turned upside down in the parking position the radius of the movement can be kept comparatively small as well as the entire space requirement.

Fig. 1.

EP 0 252 050 A2

Bundesdruckerei Berlin

## Description

Anti-skid device

This invention relates to an anti-skid device for vehicles and is of the kind that includes a pulley provided with pieces of chain or other friction increasing means intended to be thrown in under the vehicle wheel of the rotation of the pulley when this is brought in contact with the side of the vehicle wheel. Regretfully devices of this kind is not fully as simple to achieve as it sounds from the principle itself. Chains, pulley and it's supporting are namely to start with subjected to very great forces, which necessitates a heavy duty dimensioning of everything. Furthermore a relatively large movement is required to transport the chain provided pulley between it's working position in contact with the vehicle wheel and it's resting or parking position. The latter is particularily troublesome since different cars have differing available parking place for the pulley at different places. Furthermore the pulley should preferably be lifted so high that the chains do not drag on the ground, since they otherwise risk being worn prematurely. A result of the above requirements and problems at so called automatic anti-skid devices of the above type is that these are comparatively costly to produce which in turn results in that many are reluctant to obtain these safety increasing aids. In view of this the invention has at it's object to give a movement and holding mechanism for an anti-skid device of this kind that is simple, robust and furthermore cheap to product. This is obtained by giving the device the features given in the main claim.

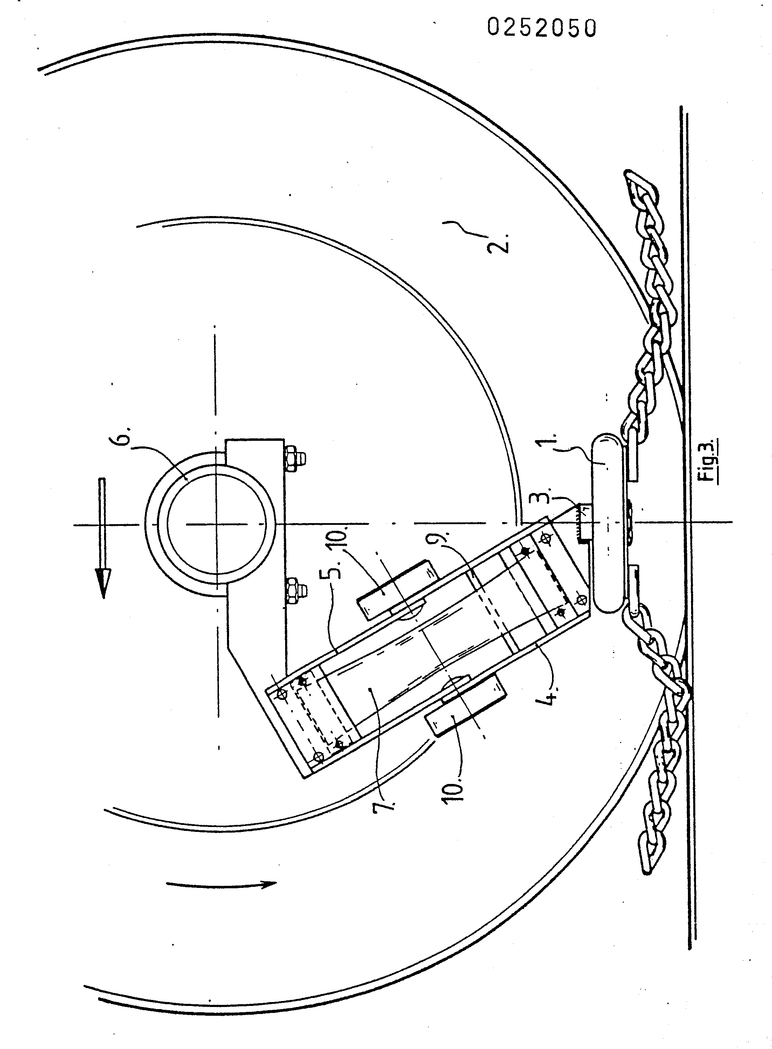

Preferable developments are apparent from the subclaims and the following description of a preferred embodiment shown in the drawings. In the drawings fig 1 shows the device according to the invention in it's working position while fig 2 shows the same device in it's resting or parking position and fig 3 the device in a lateral view.

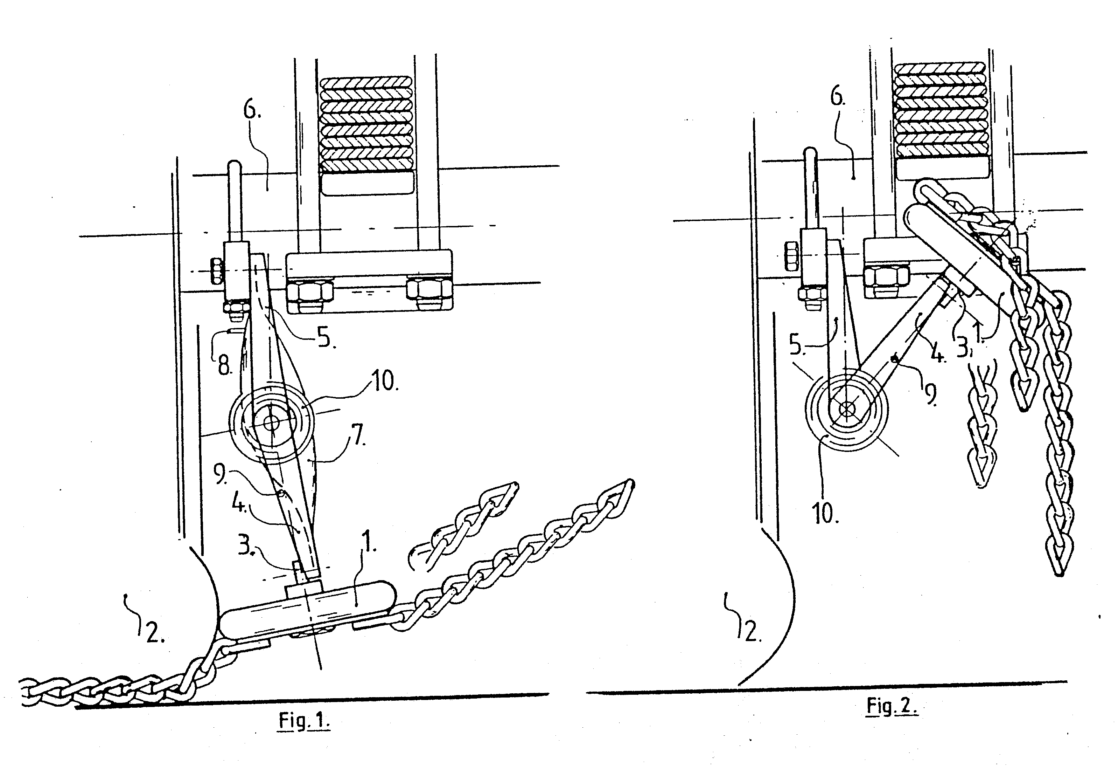

As is apparent from fig 1 the device according to the invention includes a pulley 1 provided with chain pieces, the pulley shown in fig 1 in the working position in contact with the driving vehicle wheel 2. The pulley 1 is journaled on a shaft 3 that is in turn fastened to moveable arm 4. This moveable arm is hingedly journaled at a riged arm 5 that in turn is fastened to the rear axle casing 6 of the vehicle. The arms 4 and 5 are in principle U-shaped with a uniting hinge in the outer ends of the members. Between the members and fastened to the intermediate parts of the U-shaped arm a more or less hoselike bellow 7 is arranged. This can by means of a connection 8 be supplied with pressurized air alternatively be releaved thereof. When the hoselike bellow 7 is under pressure a position shown in fig 1 will result due to the effect that the bellow/hose tries to straighten. When the pressure is relieved from the hose this is as well as the arms 5 and 4 folded together to the position shown in fig 2 by springs 10 arranged on each side of the device at the hinge connections. When the bellow once again is put under pressure it straightens together with the arms.

In order further to increase the arc of movement and the contact pressure for the pulley against the vehicle wheel a bolt 9 is arranged connecting the two members of the arm 4. The bellow/hose is in contact with this bolt when the hose tries to straighten. This means that the hose will try to push this bolt sideways which in turn result in that the arms relative each other can pass the straight position and in this way the already great arc of movement can be increased further. Due to the great arc of movement the chain wheel is almost entirely turned upside down in the parking position which drastically diminishes the space requirement for the device in it's entirety. The arms being provided with two connecting hinges a distance from each other results in a good stability and stiffness despite low weight and since the movement is achieved by a simple and cheap bellow/hose device the device according to the invention can in it's entirety be fabricated at very low cost.

## Claims

1. Anti-skid device of the kind that includes a chain provided pulley (1), the chains being thrown in under the vehicle wheel (2) when the pulley is brought in contact with a vehicle wheel, the pulley being arranged on a movable arm (4) to allow its movement from working position to rest or parking position, **characterized in** that movement is given by a bellow or hoselike element (7) that in the rest position is folded together, when fluid under pressure is supplied to the interior of the bellow, this straightens moving the arm (4) to working position.

2. Device according to claim 1, **characterized in** that it includes two U-shaped arms (4, 5), hingedly connected to each other in the outer ends of the members and that the hoseshaped bellow extends between the intermediate parts of the U-shaped arms.

3. Device according to claim 2, **characterized in** that in one or both of the arms (4, 5) between the members a bolt (9) is arranged that in straightened position of the arms prevents the hose from being quite straight resulting in that the movable arm (4) is actually brought to pass the straight position or the lateral force in this position is increased.

4. Device according to claim 1, **characterized in** that the hose (7) is manufactured curved so that it when it tries to obtain it's curved position it will move the movable (4) arm past it's straightened position.

5. Device according to claim 1, **characterized in** that a return spring for returning of the device back to the parking position is arranged inside the bellow/hose.

6. Device according to any of the previous claims, **characterized in** that the return spring is in the shape of a question mark that with it's plain part is fastened to one arm and with the other end grips around the hinged connection pressing the arms against each other alternatively that the spring has a sheep scissor shape.

7. Device according to claim 1, **characterized** by a spiral return spring.

8. Device according to claim 1, **characterized in** that two spiral springs (10) are arranged at each side of the device.

0252050

Fig. 1.

Fig. 2.

0252050

Fig.3.